# FASCICULE DE BREVET EUROPEEN

(11) **EP 3 942 221 B1**
(45) Date de publication et mention de la délivrance du brevet: **07.06.2023**
(21) Numéro de dépôt: 20725886.4
(22) Date de dépôt: 12.03.2020
(51) Int. Cl.: F17C 13/04

(54) **DISPOSITIF ET PROCÉDÉ DE STOCKAGE ET DE FOURNITURE DE CARBURANT FLUIDE**
VORRICHTUNG UND VERFAHREN ZUM LAGERN UND ZUFÜHREN VON FLÜSSIGEM BRENNSTOFF
DEVICE AND METHOD FOR STORING AND FOR SUPPLYING FLUID FUEL

(30) Priorité: 21.03.2019 FR 1902922
(43) Date de publication de la demande: 26.01.2022
(73) Titulaire: L'Air Liquide, société anonyme pour l'Étude et l'Exploitation des procédés Georges Claude, 75007 Paris (FR)
(72) Inventeur: BENSADOUN, Emmanuel, 38360 SASSENAGE (FR); BRAVAIS, Patrick, 38360 SASSENAGE (FR); SANGLAN, Patrick, 38360 SASSENAGE (FR)
(74) Mandataire: Air Liquide
(86) Numéro de dépôt international: PCT/FR2020/050520
(87) Numéro de publication internationale: WO 2020/188194

(56) Documents cités:
- WO-A1-2015/040268
- WO-A1-2018/141411
- DE-A1-102017 201 045
- US-A- 2 449 352
- US-A- 5 440 477
- US-A1- 2017 343 159
- US-A1- 2018 224 068

## Description

L'invention concerne un véhicule comprenant un dispositif de stockage et de fourniture de carburant fluide ainsi qu'un procédé de fourniture de carburant Un tel dispositif est connu de US 2449352 A. L'invention concerne plus particulièrement un véhicule comprenant un dispositif de stockage et de fourniture de carburant fluide comprenant un réservoir de gaz carburant liquéfié en équilibre avec une phase gazeuse, notamment de l'hydrogène, un circuit de remplissage du réservoir, au moins un circuit de soutirage de fluide du réservoir, au moins un circuit de régulation de la pression dans le réservoir, les circuits de remplissage, de soutirage et de régulation de la pression comprenant un ensemble de vannes disposés dans un carter distinct du réservoir.

Dans certaines applications de véhicules utilisant une pile à combustible pour générer la force motrice du véhicule et/ou l'énergie électrique d'alimentation d'équipements électriques, le véhicule possède un réservoir d'hydrogène liquéfié. La présence d'un réservoir d'hydrogène liquide embarqué et son circuit fluidique associé nécessite des mesures de sécurité tout e permettant son soutirage, des remplissages multiples et permettant la maintenance sans trop immobiliser le véhicule.

Un but de la présente invention est de proposer un dispositif permettant de satisfaire au mieux à tout ou partie de ces contraintes.

A cette fin, le véhicule comprenant un dispositif selon l'invention, par ailleurs conforme à la définition générique qu'en donne le préambule ci-dessus, est essentiellement caractérisé en ce que, le carter est raccordé de façon amovible au réservoir via un système d'accrochage mécanique démontable, le circuit de soutirage, le circuit de régulation de la pression et le circuit de remplissage comprenant un ensemble de raccords fluidiques démontables situés à la jonction entre le réservoir et le carter et configurés pour permettre la séparation entre des portions de circuits situées dans le réservoir et dans le carter lors du démontage du carter par rapport au réservoir.

Par ailleurs, des modes de réalisation de l'invention peuvent comporter l'une ou plusieurs des caractéristiques suivantes :
- en position raccordée au réservoir, le carter délimite un volume clos rempli d'une atmosphère neutre, c'est-à-dire comprenant majoritairement un gaz inerte tel que de l'hélium,
- en position raccordée au réservoir, le carter délimite un volume clos étanche sous vide, c'est-à-dire à une pression comprise entre 10⁻⁹ mbar et 10⁻¹ mbar,
- l'ensemble de vannes disposées dans le carter comprend ou est constitué de vannes de type tout ou rien,
- l'ensemble de vannes disposées dans le carter comprend ou est constitué de vannes de type à commande électrique,
- le circuit de remplissage du réservoir comprend une conduite de remplissage liquide munie d'une extrémité amont débouchant au niveau d'une paroi du carter et une extrémité aval débouchant au niveau d'une paroi du réservoir, notamment au niveau d'une extrémité inférieure du réservoir, ladite conduite de remplissage liquide comprenant au moins une vanne située dans le carter,
- le circuit de soutirage de fluide du réservoir comprend une conduite de soutirage munie d'une première extrémité amont débouchant au niveau d'une paroi du réservoir, notamment au niveau d'une extrémité inférieure du réservoir, et une extrémité aval débouchant au niveau d'une paroi du carter, ladite conduite de soutirage comprenant, disposés en série, au moins une vanne et un échangeur de chaleur de réchauffage,
- le circuit de soutirage de fluide du réservoir comprend une seconde extrémité amont débouchant au niveau d'une paroi du réservoir au niveau d'une extrémité supérieure du réservoir, ladite seconde extrémité amont étant raccordée à l'extrémité aval via au moins une vanne et l'échangeur de chaleur de réchauffage,
- le circuit de régulation de la pression dans le réservoir comprend une conduite de pressurisation comprenant une extrémité amont débouchant au niveau d'une paroi du réservoir, notamment au niveau d'une extrémité inférieure du réservoir, et une extrémité aval débouchant à un endroit distinct d'une paroi du réservoir, notamment au niveau d'une extrémité supérieure du réservoir, ladite conduite de pressurisation comprenant, disposés en série, au moins une vanne et un échangeur de chaleur de réchauffage,
- le circuit de régulation de la pression dans le réservoir comprend un échangeur de réchauffage logé dans le réservoir pour échanger thermiquement avec le carburant stocké dans le réservoir, l'échangeur étant alimenté, via une conduite par un fluide chaud, notamment du carburant soutiré du réservoir et réchauffé après son soutirage,
- le dispositif comprend au moins l'un parmi : un capteur de mesure de la pression dans le réservoir, un capteur de mesure de la pression du fluide dans le carter, ledit au moins un capteur étant situé dans le carter,
- le dispositif comprend un organe électronique de stockage et de traitement de données reliée l'ensemble de vannes, l'organe électronique de stockage et de traitement de données étant configuré pour piloter l'ouverture ou la fermeture des vannes,
- la pression dans le réservoir est augmentée via un réchauffeur situé dans le réservoir,
- le réchauffeur est un échangeur de chaleur alimenté en carburant soutiré du réservoir et réchauffé qui est mis en échange thermique avec le carburant dans le réservoir,
- le dispositif comprend un système de vidange rapide comprenant une capacité scellée contenant un gaz sous pression, notamment de l'hélium, un organe d'ouverture de la capacité et une conduite de décharge reliant la capacité avec le volume de stockage du réservoir ainsi qu'une conduite d'évacuation munie d'au moins une vanne ou un clapet pour évacuer le fluide hors du réservoir. L'invention concerne également un véhicule comprenant un dispositif selon l'une quelconque des caractéristiques ci-dessus ou ci-dessous.

L'invention concerne également un procédé fourniture de carburant à un consommateur à partir d'un dispositif de stockage et de fourniture d'un véhicule conforme à l'une quelconque des caractéristiques ci-dessus ou ci-dessous, dans lequel, lorsque la pression dans le réservoir est supérieure à un premier seuil déterminé, le carburant est soutiré sous forme gazeuse à partir de la phase gazeuse du réservoir et, lorsque la pression dans le réservoir est inférieure à un second seuil déterminé, le carburant est soutiré sous forme liquide à partir de la phase gazeuse du réservoir.

Selon d'autres particularités possibles :
- la pression dans le réservoir est augmentée en prélevant du carburant sous forme liquide à partir de la phase liquide du réservoir, en réchauffant ce carburant liquide prélevé puis en le réinjectant dans le réservoir,
- la pression dans le réservoir est augmentée via un réchauffeur situé dans le réservoir,
- le réchauffeur est un échangeur de chaleur alimenté en carburant soutiré du réservoir et réchauffé qui est mis en échange thermique avec le carburant dans le réservoir. L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] représente une vue de côté en coupe, schématique et partielle, illustrant un premier exemple de structure et de fonctionnement d'un dispositif de stockage et de fourniture de carburant,
[Fig. 2] représente une vue de côté en coupe, schématique et partielle, illustrant un deuxième exemple de structure et de fonctionnement d'un dispositif de stockage et de fourniture de carburant,
[Fig. 3] représente une simplifiée d'un dispositif de stockage et de fourniture de carburant intégré à un véhicule avec son carter d'équipement en position raccordée,
[Fig. 4] représente une simplifiée d'un dispositif de stockage et de fourniture de carburant intégré à un véhicule avec son carter d'équipement en position séparée.

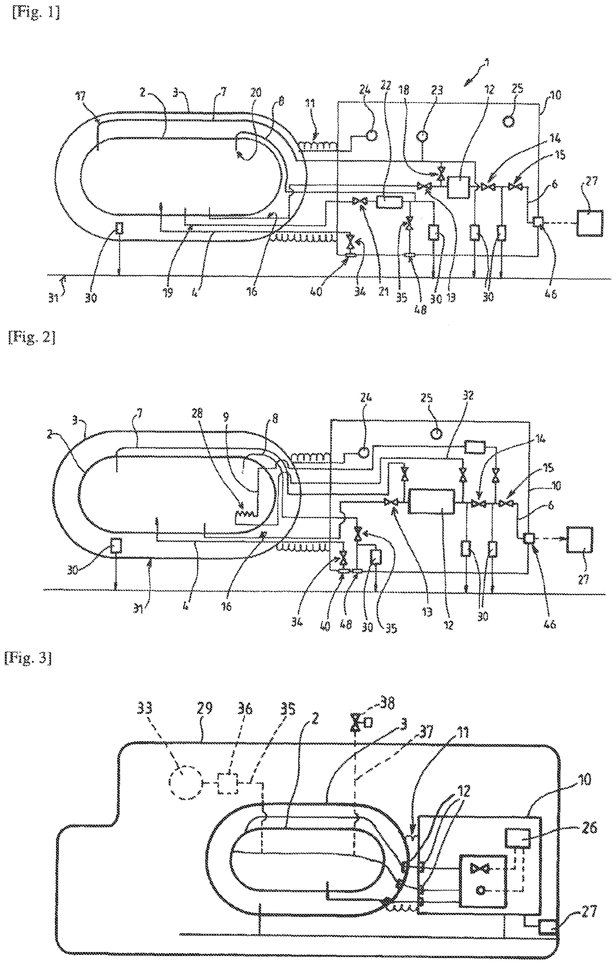

Le dispositif 1 de stockage et de fourniture de carburant fluide illustré à la [Fig. 1] comprend un réservoir 2, 3 de gaz carburant liquéfié en équilibre avec une phase gazeuse, le carburant liquéfié peut être en particulier de l'hydrogène (H2).

Le réservoir est de préférence un réservoir de type cryogénique à double enveloppe c'est-à-dire comprenant une enveloppe ou réservoir interne 2 contenant le fluide cryogénique et une enveloppe ou réservoir externe 2. Les enveloppes interne 2 et externe 3 sont espacées et délimitent entre elles un espace d'isolation thermique, notamment un espace sous vide (pression comprise entre 10⁻⁹ mbar et 10⁻¹ mbar et comprenant un matériau isolant (isolant multicouches « MLI » par exemple).

Typiquement le vide inter parois 2, 3 peut être compris entre 10⁻³ et 10⁻⁵ mbar mais d'autres isolations et gammes de pression peuvent être envisagées tels que de la mousse isolante sans vide, à de l'ultravide à 10⁻⁹mbar par exemple

Le dispositif 1 comprend un circuit 4 de remplissage du réservoir 2, 3, un circuit 6, 7 de soutirage de fluide du réservoir 2 et un circuit 8, 9 de régulation de la pression dans le réservoir 2.

Les circuits 4 de remplissage, de soutirage 6, 7 et de régulation de la pression 8, 9 comprennent un ensemble de vannes 13, 14, 15, 18, 21, 34 disposés dans un carter 10 distinct du réservoir 2, 3, c'est-à-dire que l'ensemble de vanne est dans un carter 10 distinct de la paroi 3 externe du réservoir.

Ce carter 10 est raccordé mécaniquement et fluidiquement de façon amovible au réservoir 2, 3 via un système d'accrochage 11 mécanique démontable (cf. [Fig. 1] et [Fig. 2]).

C'est-à-dire que le circuit 6, 7 de soutirage, le circuit 8, 9 de régulation de la pression et le circuit 4 de remplissage comprennent par exemple un ensemble de raccords 12 fluidiques démontables situés à la jonction entre le réservoir 2, 3 et le carter 10 et configurés pour permettre la séparation entre des portions de circuits 4, 6, 7, 8, 9 situées respectivement dans le réservoir 2, 3 et dans le carter 10 lors du démontage du carter 10 par rapport au réservoir 2, 3.

Le carter 10 peut contenir tout ou partie des équipements du dispositif notamment : les organes de contrôle du flux (vannes), les organes de réchauffage du fluide (échangeurs ou autre), l'instrumentation (capteurs), clapets de sécurité.

Ceci permet la séparation physique du carter 10 qui forme ainsi un compartiment ou boîtier d'équipements) amovible, remplaçable. Ceci permet de retirer le carter 10 en vue de sa maintenance et, pendant ce temps, de le remplacer par un autre carter 10 sur le véhicule 29 pour éviter son immobilisation. Ceci permet notamment de retirer le carter 10 sans avoir à vidanger au préalable le réservoir 2, 3.

De préférence, le carter 10 délimite un volume clos qui est indépendant fluidiquement du volume interne du réservoir et notamment du volume du réservoir 2, 3 auquel il est raccordé. C'est-à-dire que, en position raccordée au réservoir 2, 3, le volume interne du carter 10 ne communique pas avec le volume interne du réservoir (espace inter parois notamment), les atmosphères gazeuses sont indépendantes et peuvent être différentes (en terme de composition et/ou de pression et/ou de température).

Bien entendu en variante, lorsque le carter 10 est raccordé au réservoir, le volume interne du carter 10 pourrait communiquer avec le volume interne du réservoir auquel il est raccordé (formant un volume gazeux homogène).

Avantageusement, au moins en position raccordée au réservoir 2, 3, le carter 10 délimite un volume clos rempli d'une atmosphère neutre, c'est-à-dire comprenant majoritairement un gaz inerte tel que de l'hélium. Plus généralement, l'atmosphère peut comprendre ou être constituée d'un mélange gazeux à la température du liquide stocké dans le réservoir.

En variante ou en combinaison, en position raccordée au réservoir 2, 3, le carter 10 délimite un volume clos étanche sous vide, c'est-à-dire à une pression comprise entre 10⁻¹mbar à 10⁻⁹ mbar. Ce vide peut être obtenu par exemple à partir d'une atmosphère composée d'air.

Ainsi, les équipements principaux des circuits sont logés dans un carter confiné et toute panne ou fuite éventuelle n'entraîne pas de danger au niveau du réservoir. Ces fuites peuvent être collectées notamment via des clapets 30 de sécurité qui décharge un excès de pression vers l'extérieur notamment vers une conduite 31 de collecte.

La disposition des équipements dans un carter 10 séparé permet de s'affranchir d'une protection (double paroi) pour chaque équipement. Les équipements sont protégés des agressions extérieures. De plus, cette architecture éloigne les opérateurs intervenant sur ces équipements des parties les plus froides (réservoir...) .

De préférence tout ou partie des vannes 13, 14, 15, 18, 21, 34 disposées dans le carter 10 sont des vannes de type tout ou rien. Bien entendu une ou plusieurs des vannes peuvent être des vannes de régulation de débit et/ou de pression (ouverture progressive notamment).

Ceci confère une structure simple et fiable.

De plus, de préférence également, tout ou partie des vannes 13, 14, 15, 18, 21, 34 disposées dans le carter 10 sont des vannes de type à commande électrique. De plus, ces vannes sont pilotées et émettent un signal représentatif de leur état ouvert ou fermé, notamment vers un organe 26 électronique de stockage et de traitement de données (liaison sans fil et/ou par voie filaire) cf. [Fig. 1] et [Fig. 2]. Cet organe 26 électronique de stockage et de traitement de données peut comprendre un microprocesseur, un ordinateur ou tout appareillage équivalent et peut être configuré notamment pour piloter l'ouverture ou la fermeture des vannes. De préférence les organes électriques/électroniques du dispositif sont disposé à l'extérieur du carter 10.

Comme illustré, le circuit de remplissage du réservoir 2 peut comprendre une conduite 4 de remplissage liquide munie d'une extrémité amont débouchant au niveau d'une paroi du carter 10 (raccord 40 de remplissage destiné à coopérer avec un organe de remplissage tel qu'un pistolet ou une buse au bout d'un flexible). La conduite 4 de remplissage comprend une extrémité aval débouchant au niveau d'une extrémité inférieure de la paroi 2 interne du réservoir. Cette conduite 4 de remplissage liquide comprend au moins une vanne 34 située dans le carter 10.

Le circuit 6, 7 de soutirage de fluide du réservoir peut comprendre une conduite 6 de soutirage munie d'une première extrémité amont 16 débouchant au niveau d'une extrémité inférieure de la paroir 2 interne du réservoir et une extrémité aval débouchant au niveau d'une paroi du carter 10 (raccord 46 de soutirage destiné à être relié par exemple un une conduite acheminant le fluide carburant vers un utilisateur 27 tel qu'une pile à combustible par exemple). La conduite 6 de soutirage peut comprendre, disposés en série, au moins une vanne 13, 14, 15 et un échangeur 12 de chaleur de réchauffage du fluide (vaporiseur). Comme illustré, la conduite 6 de soutirage peut comprendre notamment, disposés en série, une première vanne 13, l'échangeur 12 de chaleur de réchauffage, puis deux autres vannes 14, 15 en série. Ceci permet de soutirer du liquide qui est vaporisé pour fournir en aval du gaz carburant.

Le circuit 6, 7 de soutirage de fluide du réservoir comprend de préférence une seconde extrémité amont 17 débouchant au niveau d'une extrémité supérieure du réservoir 2, 3). Cette seconde extrémité amont 17 peut être raccordée à l'extrémité aval du circuit de soutirage en amont de l'échangeur 12 de chaleur de réchauffage (via une vanne 18 par exemple).

Le circuit de régulation de la pression dans le réservoir 2, 3 peut comprendre quant à lui une conduite 8 de pressurisation comprenant une extrémité amont 19 débouchant au niveau d'une extrémité inférieure de la paroi 2 interne du réservoir et une extrémité aval 20 débouchant à un endroit distinct d'une paroi du réservoir 2, notamment au niveau d'une extrémité supérieure du réservoir 2. Cette conduite de pressurisation peut comprendre, disposés en série, au moins une vanne 21 et un échangeur de chaleur 22 de réchauffage. Ceci permet de prélever du carburant liquide, de le réchauffer (vaporiser) et de le réinjecter dans le réservoir pour y augmenter la pression. Cet échangeur 22 de mise en pression peut être un échangeur distinct de l'échangeur 12 du circuit de soutirage. En variante ces deux échangeurs 12, 22 peuvent être accouplés ou commun).

Le dispositif 1 peut comprendre un ou des capteurs et notamment au moins l'un parmi : un capteur 23 de mesure de la pression dans le réservoir (mesurant par exemple la pression dans une conduite 17 reliée à l'intérieur de la paroi 2 interne), un capteur 25 de mesure de la pression du fluide dans le carter 10, un capteur 24 mesurant la pression. Tout ou partie de ces capteurs peuvent être disposés dans le carter 10 tout en étant reliés au volumes du réservoir 2, 3 dont les pressions sont mesurées. Les signaux de ces capteurs peuvent être transmis à l'organe 26 électronique de stockage et de traitement de données. Cet organe 26 peut contrôler les vannes 26 notamment en fonction de ces signaux comme décrit ci-après.

Ainsi, l'organe 26 électronique de stockage et de traitement de données peut être configuré (programmé) pour soutirer du carburant et alimenter un organe 27 utilisateur et/ou pour contrôler (réguler) la pression au sein du réservoir, notamment lorsque le carburant n'est pas soutiré ou lorsque le réservoir est rempli.

Par exemple, l'organe 26 électronique de stockage peut être configuré pour soutirer le carburant dans la partie liquide (inférieure) ou gazeuse (supérieure) du réservoir 2 selon la pression régnant dans le réservoir 2, 3.

Ainsi, lorsque la pression mesurée 24 dans le réservoir 2 est supérieure à un premier seuil déterminé par exemple compris entre 3 et 5bar (en fonction du type de réservoir et de l'application), les vannes sont commandées pour soutirer le carburant sous forme gazeuse à partir de la phase gazeuse du réservoir (via la seconde extrémité 17 amont du circuit de soutirage, vanne 18 ouverte, vanne 13 fermée). Ceci permet de réduire la vaporisation du gaz dans le réservoir 2 (« boil-off »).

En revanche, lorsque la pression dans le réservoir 2, 3 est inférieure à un second seuil déterminé (qui peut être égale au premier seuil précité), le carburant est soutiré sous forme liquide à partir de la phase gazeuse du réservoir (vanne 13 ouverte, vanne 18 fermée).

L'organe 26 électronique de stockage peut être configuré pour assurer également une pressurisation du réservoir si nécessaire.

Cette augmentation de pression peut être réalisée en prélevant du carburant liquide (vanne 21 ouverte, réchauffage dans l'échangeur 22 et réinjection de ce fluide réchauffé dans le réservoir 2 (via l'extrémité 20). Cette augmentation de pression est indépendante de la consommation de carburant. Ce processus possède une rapidité et une flexibilité avantageuses.

Alternativement ou en combinaison, l'augmentation de pression peut être réalisée via un réchauffage électrique dans le réservoir. Ce réchauffeur électrique peut être alimenté par une batterie éventuellement rechargeable via une pile à combustible qui est alimentée en hydrogène provenant du réservoir 2, 3 (notamment du gaz de vaporisation).

Comme illustré dans la variante de la [Fig. 2], l'augmentation de pression peut être réalisée également en prélevant du carburant dans le circuit de soutirage à la sortie de l'échangeur 12 de vaporisation via une dérivation 32. Ce fluide réchauffé circule ensuite dans un échangeur 28 situé dans le réservoir 2 (par exemple immergé dans la phase liquide) pour apporter des calories au contenu du réservoir 2. Ce fluide peut ensuite être mélangée au fluide du circuit de soutirage en aval de l'échangeur 12. Cette augmentation de pression peut être utilisée lors d'un soutirage de fluide via le circuit de soutirage.

Comme illustré notamment à la [Fig. 2], le dispositif peut comporter une conduite reliant une extrémité amont (raccord débouchant sur le carter 10) et une extrémité débouchant en partie supérieure du réservoir 2 pour permettre un remplissage dans la phase gazeuse.

Le dispositif peut être intégré à tout véhicule : automobile, bateau, aéronef.

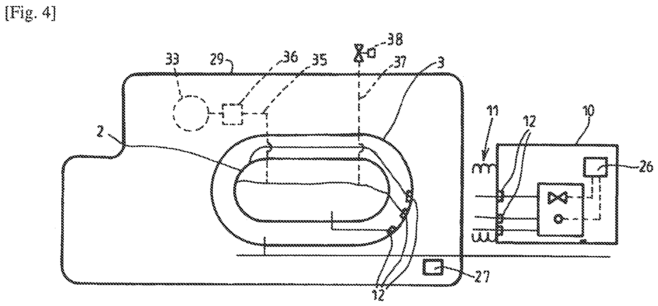

Le dispositif peut comprendre les caractéristiques ci-après (caractéristiques alternatives indépendantes ou additionnelles au caractéristiques ci-dessus). Pour assurer une sécurisation en cas de dysfonctionnement, le dispositif peut comprendre un système de vidange rapide du contenu du réservoir. Comme illustré schématiquement à la [Fig. 3] et à la [Fig. 4], ce système de vidange rapide peut comporter par exemple une capacité 33 scellée contenant un gaz sous pression (un gaz neutre, de l'hélium par exemple) associés à un organe 36 d'ouverture (disque de rupture ou actionneur électrique et/ou pyrotechnique) qui permet de vidanger le contenu du réservoir avec un fluide de gaz sous pression, par exemple vers une ligne d'évent. Cette capacité 33 de gaz sous pression peut être abritée par le dispositif 1 ou le véhicule qui intègre le dispositif 1 et peut être reliée au volume interne du réservoir 2 via une conduite 35 de décharge. Une conduite d'évacuation 37 distincte peut être prévue (munie d'au moins une vanne ou clapet 38) peut être prévue pour évacuer vers l'extérieur le contenu (conduite reliée à l'intérieur du réservoir en partie supérieure ou inférieure et débouchant dans une zone de décharge ou de récupération.

Cette conduite d'évacuation peut le cas échant être reliée à la conduite de soutirage de liquide.

La capacité 33 ou réserve pourrait contenir alternativement de l'hydrogène qui pourrait constituer une réserve de carburant supplémentaire en cas de besoin autre que pour une vidange.

Tout ou partie de la paroi 3 externe du réservoir peut participer la structure du véhicule qui abrite le réservoir. Par exemple la paroi 3 externe est reliée à une paroi du véhicule et/ou en partie monobloc pour assurer la tenue mécanique du véhicule.

Le gaz de vaporisation dans le réservoir 2 (gaz de « boil-off ») peut être récupéré dans un réservoir tampon externe d'une station de remplissage par exemple via une conduite approprié reliée par exemple au raccord 46 de soutirage.

Par exemple, ce gaz récupéré peut être utilisé pour la charge d'une batterie via au moins une pile à combustible du véhicule ou d'une entité distincte. Le gaz récupéré peut également être brûler (brûleur catalytique ou torchère).

Pour pressuriser le réservoir sans consommation électrique (ou consommation électrique réduite) il peut être utile de pouvoir apporter l'énergie nécessaire en quelques minutes pour augmenter la pression et la température dans le réservoir 2, 3. Ceci pourrait être fourni par un camion ou une station de remplissage raccordée au véhicule comprenant le dispositif 1 de stockage. Cette pressurisation peut être réalisée également par une réserve de gaz sou pression scellée intégré au dispositif 1 ou au véhicule qui le porte. Cette réserve peut être reliée au réservoir 2, 3 via une conduite de déversement munie de vanne(s).

Avantageusement le réservoir 2 ,3 pourrait être amovible dur le véhicule, c'est-à-dire remplaçable (un réservoir 2, 3 vide remplacé par un réservoir 2, 3 plein). Ceci permet de sécuriser les opérations et notamment de réduire les contraintes par rapport à remplissage via transfert de carburant dans le réservoir vide. Ceci peut être obtenu via une interface de connexion/déconnexion rapide entre le réservoir 2, 3 est les circuits qui lui sont raccordés.

Ainsi, tout en étant de structure simple et peu coûteuse, le dispositif permet de réduire la complexité, l'encombrement, la masse et les contraintes de maintenance par rapport à l'art antérieur.

## Revendications

1. Véhicule comprenant un dispositif (1) de stockage et de fourniture de carburant fluide comprenant un réservoir (2, 3) de gaz carburant liquéfié en équilibre avec une phase gazeuse, notamment de l'hydrogène, un circuit (4) de remplissage du réservoir (2, 3), au moins un circuit (6, 7) de soutirage de fluide du réservoir, au moins un circuit (8, 9) de régulation de la pression dans le réservoir (2, 3), les circuits (4) de remplissage, de soutirage (6,7) et de régulation de la pression (8, 9) comprenant un ensemble de vannes (13, 14, 15, 18, 21, 34) disposés dans un carter (10) distinct du réservoir (2, 3), le carter (10) étant raccordé de façon amovible au réservoir (2, 3) via un système d'accrochage (11) mécanique démontable, le circuit (6, 7) de soutirage, le circuit (8, 9) de régulation de la pression et le circuit (4) de remplissage comprenant un ensemble de raccords (12) fluidiques démontables situés à la jonction entre le réservoir (2, 3) et le carter (10) et configurés pour permettre la séparation entre des portions de circuits (4, 6, 7, 8, 9) situées dans le réservoir (2, 3) et dans le carter (10) lors du démontage du carter (10) par rapport au réservoir (2, 3).

2. Véhicule selon la revendication 1, **caractérisé en ce que**, en position raccordée au réservoir (2, 3), le carter (10) délimite un volume clos rempli d'une atmosphère neutre, c'est-à-dire comprenant majoritairement un gaz inerte tel que de l'hélium.

3. Véhicule selon la revendication 1 ou 2, **caractérisé en ce que**, en position raccordée au réservoir (2, 3), le carter (10) délimite un volume clos étanche sous vide, c'est-à-dire à une pression comprise entre 10⁻⁹ mbar et 10⁻¹ mbar.

4. Véhicule selon l'une quelconque des revendications 1 à 3, **caractérisé en ce que** l'ensemble de vannes (13, 14, 15, 18, 21, 34) disposées dans le carter (10) comprend ou est constitué de vannes de type tout ou rien.

5. Véhicule selon l'une quelconque des revendications 1 à 4, **caractérisé en ce que** l'ensemble de vannes (13, 14, 15, 18, 21, 34) disposées dans le carter (10) comprend ou est constitué de vannes de type à commande électrique.

6. Véhicule selon l'une quelconque des revendications 1 à 5, **caractérisé en ce que** le circuit de remplissage du réservoir (2, 3) comprend une conduite (4) de remplissage liquide munie d'une extrémité amont débouchant au niveau d'une paroi du carter (10) et une extrémité aval débouchant au niveau d'une paroi du réservoir (2), notamment au niveau d'une extrémité inférieure du réservoir (2, 3), ladite conduite (4) de remplissage liquide comprenant au moins une vanne (34) située dans le carter (10).

7. Véhicule selon l'une quelconque des revendications 1 à 6, **caractérisé en ce que** le circuit (6, 7) de soutirage de fluide du réservoir comprend une conduite (6) de soutirage munie d'une première extrémité amont (16) débouchant au niveau d'une paroi du réservoir (2), notamment au niveau d'une extrémité inférieure du réservoir (2, 3), et une extrémité aval débouchant au niveau d'une paroi du carter (10), ladite conduite de soutirage comprenant, disposés en série, au moins une vanne (13, 14, 15) et un échangeur (12) de chaleur de réchauffage.

8. Véhicule selon la revendication 7, **caractérisé en ce que** le circuit (6, 7) de soutirage de fluide du réservoir comprend une seconde extrémité amont (17) débouchant au niveau d'une paroi du réservoir (2) au niveau d'une extrémité supérieure du réservoir (2, 3), ladite seconde extrémité amont (17) étant raccordée à l'extrémité aval via au moins une vanne (18) et l'échangeur (12) de chaleur de réchauffage.

9. Véhicule selon l'une quelconque des revendications 1 à 8, **caractérisé en ce que** le circuit de régulation de la pression dans le réservoir (2, 3) comprend une conduite (8) de pressurisation comprenant une extrémité amont (19) débouchant au niveau d'une paroi du réservoir (2), notamment au niveau d'une extrémité inférieure du réservoir (2, 3), et une extrémité aval (20) débouchant à un endroit distinct d'une paroi du réservoir (2), notamment au niveau d'une extrémité supérieure du réservoir (2, 3), ladite conduite de pressurisation comprenant, disposés en série, au moins une vanne (21) et un échangeur de chaleur (22) de réchauffage.

10. Véhicule selon l'une quelconque des revendications 1 à 9, **caractérisé en ce que** le circuit de régulation de la pression dans le réservoir (2, 3) comprend un échangeur (28) de réchauffage logé dans le réservoir (2, 3) pour échanger thermiquement avec le carburant stocké dans le réservoir (2, 3), l'échangeur (28) étant alimenté, via une conduite (9) par un fluide chaud, notamment du carburant soutiré du réservoir et réchauffé après son soutirage.

11. Véhicule selon l'une quelconque des revendications 1 à 10, **caractérisé en ce qu'**il comprend au moins l'un parmi : un capteur (23) de mesure de la pression dans le réservoir (2, 3), un capteur (25) de mesure de la pression du fluide dans le carter (10), ledit au moins un capteur étant situé dans le carter (10).

12. Véhicule selon l'une quelconque des revendications 1 à 11, **caractérisé en ce qu'**il comprend un organe (26) électronique de stockage et de traitement de données reliée l'ensemble de vannes (13, 14, 15, 18, 21, 34), l'organe (26) électronique de stockage et de traitement de données étant configuré pour piloter l'ouverture ou la fermeture des vannes.

13. Véhicule selon l'une quelconque des revendications 1 à 12, **caractérisé en ce qu'**il comprend un système de vidange rapide comprenant une capacité (33) scellée contenant un gaz sous pression, notamment de l'hélium, un organe (36) d'ouverture de la capacité et une conduite (35) de décharge reliant la capacité (33) avec le volume de stockage du réservoir (2, 3) ainsi qu'une conduite d'évacuation (37) munie d'au moins une vanne ou un clapet pour évacuer le fluide hors du réservoir (2,3).

14. Procédé fourniture de carburant à un consommateur (27) à partir d'un dispositif (1) de stockage et de fourniture d'un véhicule conforme à l'une quelconque des revendications 1 à 13, dans lequel, lorsque la pression dans le réservoir (2, 3) est supérieure à un premier seuil déterminé, le carburant est soutiré sous forme gazeuse à partir de la phase gazeuse du réservoir (2, 3) et, lorsque la pression dans le réservoir (2, 3) est inférieure à un second seuil déterminé, le carburant est soutiré sous forme liquide à partir de la phase gazeuse du réservoir (2, 3).

15. Procédé selon la revendication 14, dans lequel la pression dans le réservoir (2, 3) est augmentée en prélevant du carburant sous forme liquide à partir de la phase liquide du réservoir (2), en réchauffant ce carburant liquide prélevé puis en le réinjectant dans le réservoir (2, 3).

16. Procédé selon la revendication 14 ou 15, dans lequel la pression dans le réservoir (2, 3) est augmentée via un réchauffeur (28) situé dans le réservoir (2, 3).

17. Procédé selon la revendication 16, dans lequel le réchauffeur (28) est un échangeur de chaleur alimenté en carburant soutiré du réservoir et réchauffé qui est mis en échange thermique avec le carburant dans le réservoir (2, 3).

## Patentansprüche

1. Fahrzeug, welches eine Vorrichtung (1) zur Lagerung und Zuführung von Fluidbrennstoff umfasst, die einen Behälter (2, 3) für verflüssigtes Brenngas, das sich mit einer Gasphase, insbesondere Wasserstoff, im Gleichgewicht befindet, einen Kreis (4) zur Füllung des Behälters (2, 3), mindestens einen Kreis (6, 7) zur Entnahme von Fluid aus dem Behälter und mindestens einen Kreis (8, 9) zur Regelung des Drucks im Behälter (2, 3) umfasst, wobei die Kreise zur Füllung (4), zur Entnahme (6, 7) und zur Regelung des Drucks (8, 9) eine Anordnung von Ventilen (13, 14, 15, 18, 21, 34) umfassen, die in einem von dem Behälter (2, 3) verschiedenen Gehäuse (10) angeordnet sind, wobei das Gehäuse (10) über ein demontierbares mechanisches Befestigungssystem (11) lösbar an den Behälter (2, 3) angeschlossen ist, wobei der Kreis (6, 7) zur Entnahme, der Kreis (8, 9) zur Regelung des Drucks und der Kreis (4) zu Füllung eine Anordnung von demontierbaren Fluidanschlüssen (12) umfassen, die sich an der Verbindungsstelle zwischen dem Behälter (2, 3) und dem Gehäuse (10) befinden und dafür ausgelegt sind, die Trennung zwischen den Abschnitten der Kreise (4, 6, 7, 8, 9), die sich im Behälter (2, 3) und im Gehäuse (10) befinden, bei der Demontage des Gehäuses (10) von dem Behälter (2, 3) zu ermöglichen.

2. Fahrzeug nach Anspruch 1, **dadurch gekennzeichnet, dass** das Gehäuse (10) in der an den Behälter (2, 3) angeschlossenen Position ein geschlossenes Volumen begrenzt, das mit einer neutralen, das heißt überwiegend ein Inertgas wie etwa Helium enthaltenden Atmosphäre gefüllt ist.

3. Fahrzeug nach Anspruch 1 oder 2, **dadurch gekennzeichnet, dass** das Gehäuse (10) in der an den Behälter (2, 3) angeschlossenen Position ein dichtes geschlossenes Volumen unter Vakuum, das heißt unter einem Druck zwischen 10⁻⁹ mbar und 10⁻¹ mbar, begrenzt.

4. Fahrzeug nach einem der Ansprüche 1 bis 3, **dadurch gekennzeichnet, dass** die Anordnung von Ventilen (13, 14, 15, 18, 21, 34), die im Gehäuse (10) angeordnet sind, Auf-Zu-Ventile umfasst oder aus solchen besteht.

5. Fahrzeug nach einem der Ansprüche 1 bis 4, **dadurch gekennzeichnet, dass** die Anordnung von Ventilen (13, 14, 15, 18, 21, 34), die im Gehäuse (10) angeordnet sind, Ventile eines Typs mit elektrischer Steuerung umfasst oder aus solchen besteht.

6. Fahrzeug nach einem der Ansprüche 1 bis 5, **dadurch gekennzeichnet, dass** der Kreis zur Füllung des Behälters (2, 3) eine Leitung (4) zum Einfüllen von Flüssigkeit umfasst, die mit einem stromaufwärtigen Ende versehen ist, das an einer Wand des Gehäuses (10) mündet, und mit einem stromabwärtigen Ende, das an einer Wand des Behälters (2) mündet, insbesondere an einem unteren Ende des Behälters (2, 3), wobei die Leitung (4) zum Einfüllen von Flüssigkeit mindestens ein Ventil (34) umfasst, das sich im Gehäuse (10) befindet.

7. Fahrzeug nach einem der Ansprüche 1 bis 6, **dadurch gekennzeichnet, dass** der Kreis (6, 7) zur Entnahme von Fluid aus dem Behälter eine Leitung (6) zur Entnahme umfasst, die mit einem ersten stromaufwärtigen Ende (16) versehen ist, das an einer Wand des Behälters (2) mündet, insbesondere an einem unteren Ende des Behälters (2, 3), und mit einem stromabwärtigen Ende, das an einer Wand des Gehäuses (10) mündet, wobei die Leitung zur Entnahme mindestens ein Ventil (13, 14, 15) und einen Wärmetauscher (12) zur Erhitzung, die in Reihe geschaltet sind, umfasst.

8. Fahrzeug nach Anspruch 7, **dadurch gekennzeichnet, dass** der Kreis (6, 7) zur Entnahme von Fluid aus dem Behälter ein zweites stromaufwärtiges Ende (17) umfasst, das an einer Wand des Behälters (2) an einem oberen Ende des Behälters (2, 3) mündet, wobei das zweite stromaufwärtige Ende (17) an das stromabwärtige Ende über mindestens ein Ventil (18) und den Wärmetauscher (12) zur Erhitzung angeschlossen ist.

9. Fahrzeug nach einem der Ansprüche 1 bis 8, **dadurch gekennzeichnet, dass** der Kreis zur Regelung des Drucks im Behälter (2, 3) eine Leitung (8) zur Druckbeaufschlagung umfasst, die ein stromaufwärtiges Ende (19) umfasst, das an einer Wand des Behälters (2) mündet, insbesondere an einem unteren Ende des Behälters (2, 3), und ein stromabwärtiges Ende (20), das an einer anderen Stelle einer Wand des Behälters (2) mündet, insbesondere an einem oberen Ende des Behälters (2, 3), wobei die Leitung zur Druckbeaufschlagung mindestens ein Ventil (21) und einen Wärmetauscher (22) zur Erhitzung, die in Reihe geschaltet sind, umfasst.

10. Fahrzeug nach einem der Ansprüche 1 bis 9, **dadurch gekennzeichnet, dass** der Kreis zur Regelung des Drucks im Behälter (2, 3) einen Wärmetauscher (28) zur Erhitzung umfasst, der im Behälter (2, 3) untergebracht ist, um einen Wärmeaustausch mit dem im Behälter (2, 3) gelagerten Brennstoff zu bewirken, wobei der Wärmetauscher (28) über eine Leitung (9) mit einem heißen Fluid gespeist wird, insbesondere mit Brennstoff, der aus dem Behälter entnommen und nach seiner Entnahme erhitzt wurde.

11. Fahrzeug nach einem der Ansprüche 1 bis 10, **dadurch gekennzeichnet, dass** es mindestens eines umfasst von: einem Sensor (23) zur Messung des Drucks im Behälter (2, 3) und einem Sensor (25) zur Messung des Drucks des Fluids im Gehäuse (10), wobei sich der mindestens eine Sensor im Gehäuse (10) befindet.

12. Fahrzeug nach einem der Ansprüche 1 bis 11, **dadurch gekennzeichnet, dass** es ein elektronisches Organ (26) zur Speicherung und Verarbeitung von Daten umfasst, das mit der Anordnung von Ventilen (13, 14, 15, 18, 21, 34) verbunden ist, wobei das elektronische Organ (26) zur Speicherung und Verarbeitung von Daten dafür ausgelegt ist, das Öffnen oder das Schließen der Ventile zu steuern.

13. Fahrzeug nach einem der Ansprüche 1 bis 12, **dadurch gekennzeichnet, dass** es ein System zur schnellen Entleerung umfasst, das ein versiegeltes Behältnis (33), das ein Druckgas enthält, insbesondere Helium, ein Organ (36) zum Öffnen des Behältnisses und eine Entlastungsleitung (35), die das Behältnis (33) mit dem Lagervolumen des Behälters (2, 3) verbindet, sowie eine Auslassleitung (37), die mit mindestens einem Ventil oder einer Klappe versehen ist, zum Auslassen des Fluids aus dem Behälter (2, 3) umfasst.

14. Verfahren zur Zuführung von Brennstoff zu einem Verbraucher (27) aus einer Vorrichtung (1) eines Fahrzeugs zur Lagerung und Zuführung gemäß einem der Ansprüche 1 bis 13, wobei, wenn der Druck im Behälter (2, 3) höher als ein bestimmter erster Schwellenwert ist, der Brennstoff in Gasform aus der Gasphase des Behälters (2, 3) entnommen wird und, wenn der Druck im Behälter (2, 3) niedriger als ein bestimmter zweiter Schwellenwert ist, der Brennstoff in flüssiger Form aus der Gasphase des Behälters (2, 3) entnommen wird.

15. Verfahren nach Anspruch 14, wobei der Druck im Behälter (2, 3) erhöht wird, indem Brennstoff in flüssiger Form aus der flüssigen Phase des Behälters (2) entnommen wird, indem dieser entnommene flüssige Brennstoff erhitzt wird und indem er danach wieder in den Behälter (2, 3) eingespritzt wird.

16. Verfahren nach Anspruch 14 oder 15, wobei der Druck im Behälter (2, 3) über einen Erhitzer (28) erhöht wird, der sich im Behälter (2, 3) befindet.

17. Verfahren nach Anspruch 16, wobei der Erhitzer (28) ein Wärmetauscher ist, der mit aus dem Behälter entnommenem und erhitztem Brennstoff gespeist wird, welcher mit dem Brennstoff im Behälter (2, 3) in Wärmeaustausch gebracht wird.

## Claims

1. Vehicle comprising a device (1) for storing and for supplying fluid fuel, comprising a reservoir (2, 3) of liquefied fuel gas in equilibrium with a gas phase, in particular hydrogen, a circuit (4) for filling the reservoir (2, 3), at least one circuit (6, 7) for tapping fluid from the reservoir, at least one circuit (8, 9) for regulating the pressure in the reservoir (2, 3), the filling (4), tapping (6, 7) and pressure regulating (8, 9) circuits comprising a set of valves (13, 14, 15, 18, 21, 34) arranged in a housing (10) separate from the reservoir (2, 3), the housing (10) being removably connected to the reservoir (2, 3) via a demountable mechanical coupling system (11), the tapping circuit (6, 7), the pressure regulating circuit (8, 9) and the filling circuit (4) comprising a set of demountable fluidic connectors (12) located at the junction between the reservoir (2, 3) and the housing (10) and configured to allow separation between portions of circuits (4, 6, 7, 8, 9) located in the reservoir (2, 3) and in the housing (10) during the demounting of the housing (10) with respect to the reservoir (2, 3).

2. Vehicle according to Claim 1, **characterized in that**, in the position connected to the reservoir (2, 3), the housing (10) defines a closed volume filled with a neutral atmosphere, i.e. predominantly comprising an inert gas such as helium.

3. Vehicle according to Claim 1 or 2, **characterized in that**, in the position connected to the reservoir (2, 3), the housing (10) defines a sealed, closed vacuum volume, i.e. at a pressure ranging between 10⁻⁹ mbar and 10⁻¹ mbar.

4. Vehicle according to any one of Claims 1 to 3, **characterized in that** the set of valves (13, 14, 15, 18, 21, 34) arranged in the housing (10) comprises or is made up of all-or-nothing type valves.

5. Vehicle according to any one of Claims 1 to 4, **characterized in that** the set of valves (13, 14, 15, 18, 21, 34) arranged in the housing (10) comprises or is made up of electrical control type valves.

6. Vehicle according to any one of Claims 1 to 5, **characterized in that** the filling circuit of the reservoir (2, 3) comprises a liquid filling pipe (4) provided with an upstream end emerging at a wall of the housing (10) and a downstream end emerging at a wall of the reservoir (2), in particular at a lower end of the reservoir (2, 3), said liquid filling pipe (4) comprising at least one valve (34) located in the housing (10).

7. Vehicle according to any one of Claims 1 to 6, **characterized in that** the circuit (6, 7) for tapping fluid from the reservoir comprises a tapping pipe (6) provided with a first upstream end (16) emerging at a wall of the reservoir (2), in particular at a lower end of the reservoir (2, 3), and a downstream end emerging at a wall of the housing (10), said tapping pipe comprising, arranged in series, at least one valve (13, 14, 15) and a heating heat exchanger (12).

8. Vehicle according to Claim 7, **characterized in that** the circuit (6, 7) for tapping fluid from the reservoir comprises a second upstream end (17) emerging at a wall of the reservoir (2) at an upper end of the reservoir (2, 3), said second upstream end (17) being connected to the downstream end via at least one valve (18) and the heating heat exchanger (12).

9. Vehicle according to any one of Claims 1 to 8, **characterized in that** the circuit for regulating the pressure in the reservoir (2, 3) comprises a pressurization pipe (8) comprising an upstream end (19) emerging at a wall of the reservoir (2), in particular at a lower end of the reservoir (2, 3), and a downstream end (20) emerging at a separate point of a wall of the reservoir (2), in particular at an upper end of the reservoir (2, 3), said pressurization pipe comprising, arranged in series, at least one valve (21) and a heating heat exchanger (22).

10. Vehicle according to any one of Claims 1 to 9, **characterized in that** the circuit for regulating the pressure in the reservoir (2, 3) comprises a heating exchanger (28) housed in the reservoir (2, 3) for thermally exchanging with the fuel stored in the reservoir (2, 3), the exchanger (28) being fed, via a pipe (9), with a hot fluid, in particular fuel that is tapped from the reservoir and is heated after being tapped.

11. Vehicle according to any one of Claims 1 to 10, **characterized in that** it comprises at least one from among: a sensor (23) for measuring the pressure in the reservoir (2, 3), a sensor (25) for measuring the pressure of the fluid in the housing (10), said at least one sensor being located in the housing (10).

12. Vehicle according to any one of Claims 1 to 11, **characterized in that** it comprises an electronic data storage and processing component (26) connected to the set of valves (13, 14, 15, 18, 21, 34), the electronic data storage and processing component (26) being configured to control the opening or the closing of the valves.

13. Vehicle according to any one of Claims 1 to 12, **characterized in that** it comprises a rapid drainage system comprising a sealed container (33) containing a pressurized gas, in particular helium, a component (36) for opening the container and a discharge pipe (35) connecting the container (33) to the storage volume of the reservoir (2, 3), as well as a discharge pipe (37) provided with at least one valve or a flap for discharging the fluid out of the reservoir (2, 3).

14. Method for providing a consumer (27) with fuel from a storage and supply device (1) of a vehicle according to any one of Claims 1 to 13, wherein, when the pressure in the reservoir (2, 3) is higher than a first determined threshold, the fuel is tapped in gas form from the gas phase of the reservoir (2, 3) and, when the pressure in the reservoir (2, 3) is lower than a second determined threshold, the fuel is tapped in liquid form from the gas phase of the reservoir (2, 3).

15. Method according to Claim 14, wherein the pressure in the reservoir (2, 3) is increased by withdrawing fuel in liquid form from the liquid phase of the reservoir (2), by heating this withdrawn liquid fuel, then reintroducing it into the reservoir (2, 3).

16. Method according to Claim 14 or 15, wherein the pressure in the reservoir (2, 3) is increased via a heater (28) located in the reservoir (2, 3).

17. Method according to Claim 16, wherein the heater (28) is a heat exchanger fed with fuel that is tapped from the reservoir and is heated and that is set to exchange heat with the fuel in the reservoir (2, 3).
